# DEMANDE DE BREVET EUROPEEN

(11) **EP 2 650 175 A1**
(43) Date de publication de la demande: **16.10.2013**
(21) Numéro de dépôt: 13163201.0
(22) Date de dépôt: 10.04.2013
(51) Int. Cl.: B60R 5/04

(54) **Système de montage d'un cache-bagages de véhicule automobile sur deux ébénisteries latérales de coffre dudit véhicule**

(30) Priorité: 11.04.2012 FR 1253331
(71) Demandeur: CENTRE D'ETUDE ET DE RECHERCHE POUR L'AUTOMOBILE (CERA), 51100 Reims (FR)
(72) Inventeur: Crochet, Laurent, 51170 Fismes (FR); Debled, Emmanuel, 51500 Taissy (FR)
(74) Mandataire: Sayettat, Julien Christian

(57) **Abrégé**

L'invention concerne un système (1) de montage d'un cache-bagages (2) de véhicule automobile sur deux ébénisteries (3) latérales de coffre dudit véhicule, ledit cache-bagages comprenant: un rideau (4) souple rétractable comprenant un bord avant (5) et un bord arrière (6) ; un dispositif (7) de rappel dudit rideau associé audit bord avant ; une bavette (8) de rigidification comprenant deux parties latérales (9) pourvues de moyens d'emboitement (10) latéraux respectifs ; chacune desdites ébénisteries comprenant : une piste (11) de coulissement longitudinal d'une partie latérale (9) respective ; un moyen d'emboîtement réciproque (12) surplombant l'arrière de ladite piste ; un ressort monté en arrière de ladite piste, ledit ressort saillant vers le haut ; lesdits moyens d'emboitement et d'emboitement réciproque étant agencés pour s'emboiter entre eux, sous l'action desdits ressorts repoussant lesdites parties latérales vers le haut, et pour se déboiter l'un de l'autre par un appui vers le bas sur ladite bavette.

## Description

L'invention concerne un système de montage d'un cache-bagages de véhicule automobile sur deux ébénisteries latérales de coffre dudit véhicule.

Il est connu de réaliser un système de montage d'un cache-bagages de véhicule automobile sur deux ébénisteries latérales de coffre dudit véhicule, ledit cache-bagages comprenant:
- un rideau souple rétractable comprenant un bord avant et un bord arrière,
- un dispositif de rappel dudit rideau associé audit bord avant, de sorte que ledit rideau soit mobile entre une configuration rétractée de rangement et une configuration déployée de recouvrement des bagages,
- une bavette de rigidification associée le long dudit bord arrière, ladite bavette comprenant deux moyens d'emboitement latéraux,
chacune desdites ébénisteries comprenant un moyen d'emboîtement réciproque disposé en arrière de ladite ébénisterie, de manière à permettre le verrouillage dudit rideau en configuration déployée.

Dans un mode de réalisation connu, les moyens d'emboitement sont agencés de sorte que leur déboitement se fait par une légère traction de la bavette vers l'arrière suivie d'une poussée vers le bas de ladite bavette.

A l'inverse, l'emboitement des moyens d'emboitement se fait par une traction arrière de la bavette suivie d'une poussée de ladite bavette vers le haut.

Un tel mode d'emboitement ou de déboitement est peu ergonomique puisque requérant deux mouvements successifs de l'utilisateur.

L'invention a pour but de pallier cet inconvénient en proposant un système de montage ergonomique permettant un emboitement par simple traction de la bavette vers l'arrière et un déboitement par simple poussée de ladite bavette vers le bas.

A cet effet, l'invention propose un système de montage d'un cache-bagages de véhicule automobile sur deux ébénisteries latérales de coffre dudit véhicule, ledit cache-bagages comprenant:
- un rideau souple rétractable comprenant un bord avant et un bord arrière,
- un dispositif de rappel dudit rideau associé audit bord avant, de sorte que ledit rideau soit mobile entre une configuration rétractée de rangement et une configuration déployée de recouvrement des bagages,
- une bavette de rigidification associée le long dudit bord arrière, ladite bavette comprenant deux parties latérales pourvues de moyens d'emboitement latéraux respectifs,
chacune desdites ébénisteries comprenant :
- une piste de coulissement longitudinal d'une partie latérale respective de bavette,
- un moyen d'emboîtement réciproque surplombant l'arrière de ladite piste,
- un ressort monté en arrière de ladite piste, ledit ressort saillant vers le haut,
lesdits moyens d'emboitement et d'emboitement réciproque étant agencés pour s'emboiter entre eux, sous l'action desdits ressorts repoussant lesdites parties latérales vers le haut, lorsque ledit rideau est mis en configuration déployée, de manière à le bloquer dans ladite configuration, et pour se déboiter l'un de l'autre par un appui vers le bas sur ladite bavette, à l'encontre desdits ressorts, de manière à permettre un retour dudit rideau en configuration rétractée.

Dans cette description, les termes de positionnement dans l'espace (bas, haut, avant, arrière, latéral, longitudinal,...) sont pris en référence au système disposé dans le véhicule.

Avec l'agencement proposé, l'emboitement se fait par simple traction de la bavette vers l'arrière amenant les moyens d'emboitement à s'insérer sous les moyens réciproques et à s'emboiter avec eux par translation vers le haut de ladite bavette sous l'action des ressorts.

Quant au déboitement, il se fait par simple poussée appliquée sur la bavette vers le bas, à l'encontre des ressorts, le rideau étant alors rappelé en configuration rétractée au moyen du dispositif de rappel.

D'autres particularités et avantages de l'invention apparaîtront dans la description qui suit, faite en référence aux figures jointes, dans lesquelles :

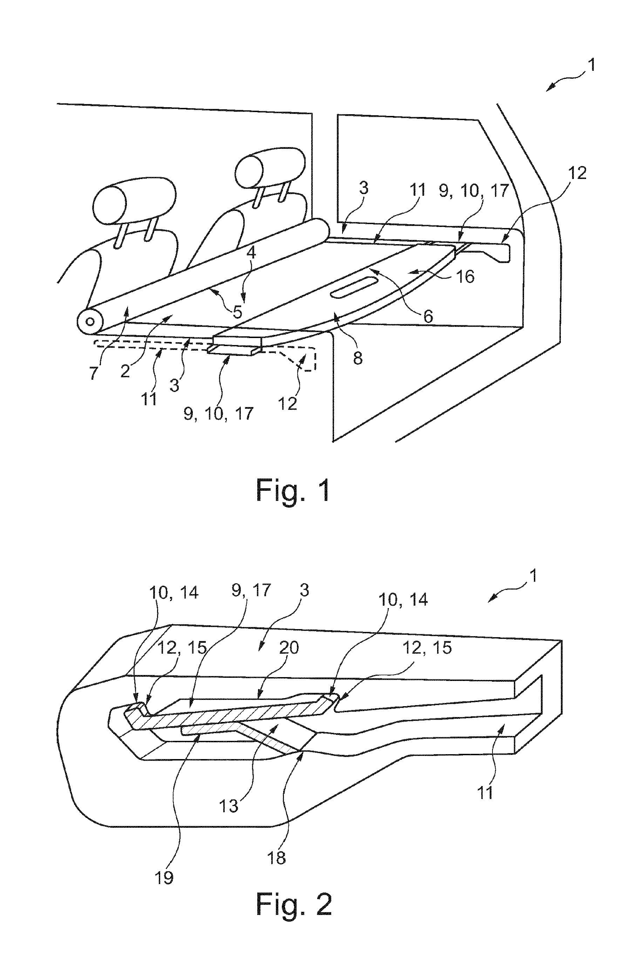

- la figure 1 est une représentation schématique en perspective d'un système selon une réalisation,
- la figure 2 est une vue schématique en perspective partielle de détail du système de la figure 1, le rideau étant déployé avec emboitement des moyens d'emboitement entre eux,

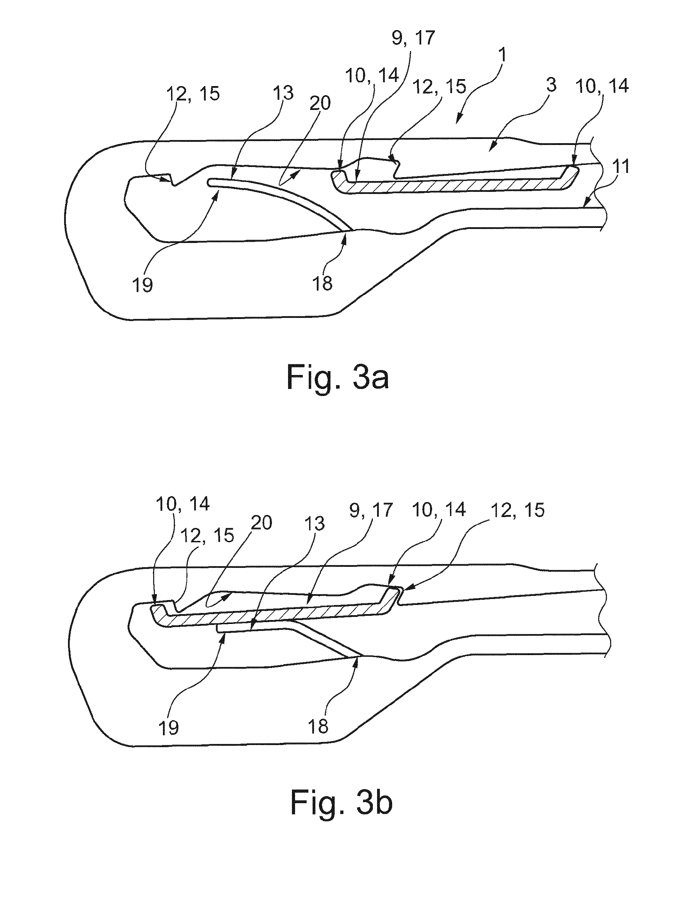

- les figures 3 sont des vues latérales schématiques en coupe partielle de détail du système de la figure 1, le rideau étant en cours de déploiement (3a) et étant déployé avec emboitement des moyens d'emboitement entre eux (3b).

En référence aux figures, on décrit un système 1 de montage d'un cache-bagages 2 de véhicule automobile sur deux ébénisteries 3 latérales de coffre dudit véhicule, ledit cache-bagages comprenant:
- un rideau 4 souple rétractable comprenant un bord avant 5 et un bord arrière 6,
- un dispositif 7 de rappel dudit rideau associé audit bord avant, de sorte que ledit rideau soit mobile entre une configuration rétractée de rangement et une configuration déployée de recouvrement des bagages,
- une bavette 8 de rigidification associée le long dudit bord arrière, ladite bavette comprenant deux parties latérales 9 pourvues de moyens d'emboitement 10 latéraux respectifs,
chacune desdites ébénisteries comprenant :
- une piste 11 de coulissement longitudinal d'une partie latérale 9 respective,
- un moyen d'emboîtement réciproque 12 surplombant l'arrière de ladite piste,
- un ressort 13 monté en arrière de ladite piste, ledit ressort saillant vers le haut,
lesdits moyens d'emboitement et d'emboitement réciproque étant agencés pour s'emboiter entre eux, sous l'action desdits ressorts repoussant lesdites parties latérales vers le haut, lorsque ledit rideau est mis en configuration déployée, de manière à le bloquer dans ladite configuration, et pour se déboiter l'un de l'autre par un appui vers le bas sur ladite bavette, à l'encontre desdits ressorts, de manière à permettre un retour dudit rideau en configuration rétractée.

Selon la réalisation représentée, un moyen d'emboitement 10 comprend deux butées 14 saillant vers le haut, lesdites butées étant décalées longitudinalement, le moyen d'emboitement réciproque comprenant deux butées réciproques 15 de blocage desdites butées.

Un tel agencement présente l'avantage d'éviter un déboitement par appui sur l'arrière de la bavette 8 accompagné d'une rotation de ladite bavette autour de son rebord avant.

Lorsqu'une telle cinématique de rotation est possible, on peut en effet observer un déboitement non souhaité lié à une fermeture violente du hayon du véhicule, ledit hayon pouvant entrainer la bavette 8 en rotation autour de son bord avant et entrainer une rétraction intempestive du rideau 4.

Par le double emboitement prévu, un déboitement par rotation est impossible, l'utilisateur étant obligé de faire faire à la bavette 8 une translation vers le bas pour permettre la rétraction du rideau 4.

Selon la réalisation représentée, au moins une butée 14 - située ici en avant - est en forme de harpon, la butée réciproque 15 correspondante présentant une forme complémentaire, de sorte que le déboitement des moyens d'emboitement s'accompagne d'un léger recul de la bavette 8, ce qui permet un emboitement de résistance accrue.

Selon la réalisation représentée, la bavette 8 comprend un corps 16 principal et deux plaques 17 métalliques latérales respectives saillant latéralement de part et d'autre dudit corps, lesdites plaques formant les parties latérales 9 de ladite bavette, les butées 14 étant formées par deux pliages d'extrémité réalisés dans lesdites plaques.

Selon la réalisation représentée, le ressort 13 est sous forme d'une lame métallique flexible présentant une extrémité avant 18 solidaire de la piste 11 de coulissement et une extrémité arrière 19 libre saillant vers le haut.

Selon la réalisation représentée, les moyens d'emboitement réciproques 15 sont intégrés à une paroi 20 solidaire de l'ébénisterie 3 correspondante, ladite paroi surplombant la piste 11 de coulissement.

## Revendications

1. Système (1) de montage d'un cache-bagages (2) de véhicule automobile sur deux ébénisteries (3) latérales de coffre dudit véhicule, ledit cache-bagages comprenant:
• un rideau (4) souple rétractable comprenant un bord avant (5) et un bord arrière (6),
• un dispositif (7) de rappel dudit rideau associé audit bord avant, de sorte que ledit rideau soit mobile entre une configuration rétractée de rangement et une configuration déployée de recouvrement des bagages,
• une bavette (8) de rigidification associée le long dudit bord arrière, ladite bavette comprenant deux parties latérales (9) pourvues de moyens d'emboitement (10) latéraux respectifs,
chacune desdites ébénisteries comprenant :
• une piste (11) de coulissement longitudinal d'une partie latérale (9) respective,
• un moyen d'emboîtement réciproque (12) surplombant l'arrière de ladite piste,
• un ressort (13) monté en arrière de ladite piste, ledit ressort saillant vers le haut,
lesdits moyens d'emboitement et d'emboitement réciproque étant agencés pour s'emboiter entre eux, sous l'action desdits ressorts repoussant lesdites parties latérales vers le haut, lorsque ledit rideau est mis en configuration déployée, de manière à le bloquer dans ladite configuration, et pour se déboiter l'un de l'autre par un appui vers le bas sur ladite bavette, à l'encontre desdits ressorts, de manière à permettre un retour dudit rideau en configuration rétractée.

2. Système selon la revendication 1, **caractérisé en ce qu'**un moyen d'emboitement (10) comprend deux butées (14) saillant vers le haut, lesdites butées étant décalées longitudinalement, le moyen d'emboitement réciproque (12) comprenant deux butées réciproques (15) de blocage desdites butées.

3. Système selon la revendication 2, **caractérisé en ce qu'**au moins une butée (14) est en forme de harpon, la butée réciproque (15) correspondante présentant une forme complémentaire, de sorte que le déboitement des moyens d'emboitement s'accompagne d'un léger recul de la bavette (8).

4. Système selon l'une quelconque des revendications 1 à 3, **caractérisé en ce que** la bavette (8) comprend un corps (16) principal et deux plaques (17) métalliques latérales respectives saillant latéralement de part et d'autre dudit corps, lesdites plaques formant les parties latérales (9) de ladite bavette, les butées étant formées par deux pliages d'extrémité réalisés dans lesdites plaques.

5. Système selon l'une quelconque des revendications 1 à 4, **caractérisé en ce que** le ressort (13) est sous forme d'une lame métallique flexible présentant une extrémité avant (18) solidaire de la piste (11) de coulissement et une extrémité arrière (19) libre saillant vers le haut.

6. Système selon l'une quelconque des revendications 1 à 5, **caractérisé en ce que** les moyens d'emboitement réciproques (12) sont intégrés à une paroi (20) solidaire de l'ébénisterie (3) correspondante, ladite paroi surplombant la piste (11) de coulissement.
